# DEMANDE DE BREVET EUROPEEN

(11) **EP 3 831 885 A1**
(43) Date de publication de la demande: **09.06.2021**
(21) Numéro de dépôt: 20208460.4
(22) Date de dépôt: 18.11.2020
(51) Int. Cl.: C08L 77/02, C08L 77/06, B60K 5/12, B62D 21/11, C08G 69/26

(54) **COMPOSITION POLYMÉRIQUE THERMOPLASTIQUE, SON PROCÉDÉ DE PRÉPARATION ET DISPOSITIF AMORTISSANT DES VIBRATIONS L'INCORPORANT**

(30) Priorité: 20.11.2019 FR 1912947
(71) Demandeur: HUTCHINSON, 75008 Paris (FR)
(72) Inventeur: LUCAS, Antoine, 45200 MONTARGIS (FR); DOUDEAU-PIRAT, Marion, 45700 CHEVILLON SUR HUILLARD (FR)
(74) Mandataire: Plasseraud IP

(57) **Abrégé**

L'invention concerne une composition polymérique thermoplastique comprenant des polyamides, son procédé de préparation et un dispositif pour véhicule à moteur apte à amortir des vibrations. La composition (11, I2, I3, I4) comprend
- un polyamide aliphatique
- un polyphtalamide issu d'une diamine aliphatique en C6-C12 et d'un diacide aromatique comprenant de l'acide téréphtalique, le ratio massique polyamide aliphatique/ polyphtalamide étant > 1 et
- une charge renforçante comprenant des fibres de verre.

La composition présente, après conditionnement « RH50 », des valeurs de tan delta selon ISO 6721-5 maximales entre 60-90° C et 1-3000 Hz, avec
(i) tan delta > 4,20 % à 60° C et/ou
(ii) tan delta > 4,00 % à 80° C et/ou
(iii) tan delta > 3,80 % à 90° C.

## Description

### Domaine technique

L'invention concerne une composition polymérique thermoplastique comprenant un alliage de polyamides, son procédé de préparation et un dispositif pour véhicule à moteur apte à amortir des vibrations en particulier dans une plage de fréquences allant de 1 Hz à 3000 Hz et à une température comprise entre 60° C et 90° C. L'invention s'applique notamment à toute pièce structurelle transmettant des vibrations (par exemple reçues des roues du véhicule), ou à un support antivibratoire pour véhicule à moteur thermique, hybride ou électrique réunissant des premier et deuxième éléments rigides en amortissant des vibrations entre eux et en supportant une charge, tel qu'un support de liaison reliant le moteur à un élément de la structure du véhicule (e.g. sa caisse), étant précisé que l'invention s'applique à tout système antivibratoire ou de liaison au sol de véhicule automobile soumis à des vibrations dans tout ou partie des plages de fréquences et de températures précitées et éventuellement en outre hors de ces plages.

### Technique antérieure

De manière connue, les corps d'étriers de freins et les bras de supports moteur pour véhicules automobiles sont réalisés en un matériau métallique par exemple à base d'aluminium ou de magnésium. Ces pièces structurelles métalliques présentent en général des propriétés mécaniques satisfaisantes, mais l'inconvénient d'être relativement lourdes et de procurer un faible amortissement des vibrations en roulage, notamment à une fréquence allant de 1 à 3000 Hz et à une température comprise entre 60 et 90° C.

JP 4 441 855 B2 divulgue un article rigide pour accessoire de véhicule automobile résistant aux vibrations, qui présente un module en flexion allant de 13 à 25 GPa et un indice de fluidité à chaud allant de 4,0 à 50,0 g / 10 min, mesuré à 275° C sous une masse de 2160 g. La composition de l'article comprend un polyamide cristallin tel qu'un PA 66, une quantité inférieure en poids d'un autre polyamide tel qu'un polyphtalamide par exemple de dénomination « MXD6 » (poly m-xylylène adipamide issu d'une diamine aromatique), un polypropylène par exemple modifié par l'acide maléique à titre d'agent compatibilisant et, à titre de charge renforçante, des fibres de verre combinées à au moins une autre charge telle que la Wollastonite.

### Exposé de l'invention

Un but de la présente invention est de proposer une composition polymérique thermoplastique à hautes performances mécaniques et antivibratoires qui remédie notamment aux inconvénients précités en présentant, par rapport à une composition témoin constituée du même polyamide aliphatique renforcé à l'identique par des fibres de verres (e.g. composition témoin appelée « PA66 GF50 », « PA6 GF50 » ou « PA6 GF35 » lorsque le polyamide aliphatique est un PA 6 ou un PA 66 et avec 50 % ou 35 % en masse de fibres de verre), un amortissement amélioré à des fréquences caractérisant les sollicitations appliquées en particulier à toute pièce structurelle transmettant des vibrations par exemple reçues des roues d'un véhicule à moteur, ou à tout support antivibratoire dans un véhicule automobile tel que le support de liaison précité entre le moteur et un élément de la structure du véhicule comme par exemple sa caisse, tout en présentant des propriétés mécaniques au moins égales à celle de la composition témoin correspondante.

Ce but est atteint en ce que la Demanderesse vient de découvrir de manière inattendue au cours de ses recherches que, si l'on utilise en combinaison avec des fibres de verre un alliage d'un polyamide aliphatique et d'un polyphtalamide spécifique issu au moins en partie d'une diamine aliphatique de 6 à 12 atomes de carbone et d'un acide carboxylique aromatique comprenant de l'acide téréphtalique suivant un ratio massique polyamide aliphatique / polyphtalamide supérieur à 1, alors on peut obtenir, par rapport à ladite composition témoin correspondante, un amortissement quantifié par des valeurs de tan delta (mesurées par analyse mécanique dynamique tant à sec qu'après un conditionnement en atmosphère humide de type RH50) qui est très nettement amélioré sur une plage de fréquence de 1 à 3000 Hz à des températures comprises entre 60 et 90° C, et des propriétés mécaniques statiques mesurées tant à 23° C qu'à 120° C qui sont supérieures ou au moins conservées.

Ainsi, selon un premier aspect de l'invention, une composition polymérique thermoplastique selon l'invention comprend :
- au moins un polyamide aliphatique,
- au moins un polyphtalamide issu au moins en partie d'une diamine aliphatique ayant de 6 à 12 atomes de carbone et d'un acide dicarboxylique aromatique comprenant de l'acide téréphtalique, le ratio massique dudit au moins un polyamide aliphatique sur ledit au moins un polyphtalamide étant supérieur à 1, et
- une charge renforçante comprenant des fibres de verre.
   Selon ce premier aspect de l'invention, la composition présente, après un conditionnement dans de l'air à 50 % d'humidité relative (RH50), des valeurs de tan delta mesurées par analyse mécanique dynamique (DMA) selon la norme ISO 6721-5 sur des éprouvettes rectangulaires de 34,81 mm de longueur, 4 mm de largeur et 2 mm d'épaisseur, par des balayages en fréquences allant de 0,1 Hz à 20 Hz et avec une amplitude de déformation de 2,5 µm, par exemple par des paliers de 5° C sur une plage de température allant de Tg - 60° C à Tg + 60° C, lesdites valeurs de tan delta, obtenues par le principe de superposition temps-température, étant maximales à une température comprise entre 60° C et 90° C dans une plage de fréquences allant de 1 Hz à 3000 Hz, et satisfaisant à l'une au moins des conditions (i), (ii), (iii) suivantes, pour au moins une fréquence de ladite plage de fréquences inclusivement comprise entre 1 Hz et 3000 Hz:
   (i) tan delta > 4,20 % à 60° C,
   (ii) tan delta > 4,00 % à 80° C,
   (iii) tan delta > 3,80 % à 90° C.

Par « polyamide aliphatique » (PA en abrégé), on entend de manière connue dans la présente description un polyamide homopolymère ou copolymère obtenu par réaction d'au moins une diamine par exemple de 4 à 10 atomes de carbone, et d'au moins un acide dicarboxylique aliphatique par exemple de 6 à 12 atomes de carbone. Ladite au moins une diamine peut être de type aliphatique à chaîne linéaire, ramifiée ou cyclo-aliphatique (i.e. alicyclique), étant de préférence linéaire. Ledit au moins un acide dicarboxylique aliphatique peut être également à chaîne linéaire, ramifiée ou cyclo-aliphatique, étant de préférence linéaire.

De préférence, ledit au moins un polyamide aliphatique selon l'invention est choisi dans le groupe constitué par les PA 6.6 (encore appelé PA 66 ci-après), PA 6, PA 11, PA 12, PA 6/66, PA 4.6, PA 5.6, PA 6.9, PA 6.10, PA 6.12, PA 10.10, PA 10.12 et les mélanges d'au moins deux de ces PA.

Encore plus préférentiellement, ledit au moins un polyamide aliphatique comprend :
- un PA 66, auquel cas la composition de l'invention est particulièrement utilisable pour un véhicule automobile à moteur thermique avec lesdites valeurs de tan delta maximales entre 70 et 90° C (vu que la température standard pour un tel véhicule varie usuellement entre 70 et 90° C pour une température maximale de 120° C), et/ou
- un PA 6, auquel cas la composition de l'invention est particulièrement utilisable pour un véhicule automobile électrique avec lesdites valeurs de tan delta maximales entre 60 et 90° C (vu que la température standard pour un tel véhicule est typiquement d'environ 65° C pour une température maximale de 85° C).

Par « polyphtalamide » (PPA en abrégé), on entend dans la présente description, conformément à la norme ASTM D5336, un polyamide dont la portion acide dicarboxylique des unités de répétition dans la chaîne polymérique contient un taux molaire total d'acide téréphtalique (TPA) et d'acide isophtalique (IPA) au moins égal à 55 %. Ainsi, un polyphtalamide est de manière connue un polyamide dit « semi-aromatique » qui est obtenu par la réaction d'une diamine avec un acide dicarboxylique aromatique.

Ledit au moins un polyphtalamide selon l'invention est de préférence semi-cristallin, étant ainsi par définition tel que ladite portion acide dicarboxylique contient un taux molaire d'acide isophtalique (IPA) au plus égal à 55 %, de préférence inclusivement compris entre 0 et 50 % et encore plus préférentiellement de 0 % (i.e. sans IPA), étant précisé qu'un PPA en variante amorphe tel que le PA 6T/6I est utilisable dans une composition de l'invention, comme expliqué ci-après.

Ledit au moins un polyphtalamide selon l'invention peut être :
- un homopolymère polyamide semi-aromatique de macrostructure issue d'une diamine spécifiquement aliphatique ayant de 6 à 12 atomes de carbone (excluant ainsi les diamines aromatiques telles que celle dont est issu le « MXD6 » précité) et d'un acide dicarboxylique aromatique comprenant de l'acide téréphtalique, ou
- un copolymère (i.e. copolyamide semi-aromatique) combinant à la macrostructure ci-dessus un autre motif X polyamide semi-aromatique issu d'une diamine aliphatique ayant de 6 à 12 atomes de carbone et d'un acide dicarboxylique aromatique comprenant de l'acide téréphtalique ou isophtalique.

Par « charge », on entend dans la présente description une ou plusieurs charge(s) individuelle(s) de grade renforçant pour l'alliage de polyamides selon l'invention, qui est/ sont dispersée(s) de manière homogène dans la composition, étant précisé que la charge renforçante selon l'invention comprend lesdites fibres de verre à titre de charge inorganique renforçante.

Le conditionnement dans de l'air à 50 % d'humidité relative (RH50) précité qui a été utilisé pour caractériser les compositions de l'invention est un protocole dérivé de la norme ISO 1110 et défini par la Demanderesse en mettant en œuvre les quatre étapes suivantes, spécifiquement pour des éprouvettes H2 :
- on a séché les éprouvettes H2 pendant 4 heures à 80° C et on les a pesées (état initial = « DAM » pour « dry as molded » : sec comme à l'état moulé) ;
- on a ensuite laissé les éprouvettes dans une enceinte climatique pendant 20 heures à 50° C et 95 % d'humidité afin de les saturer en eau, et on les a pesées (état saturé en eau) ;
- on a pesé les éprouvettes tous les jours jusqu'à ce que leur masse se stabilise (variation de masse inférieure à 0,1 % d'un jour à l'autre), ce qui correspond à un conditionnement stabilisé en humidité RH50 ; et
- on a ensuite calculé le pourcentage de reprise en humidité en comparant la masse des éprouvettes stabilisées à la masse des éprouvettes sèches.

On notera que le protocole de mesure « DMA » utilisé pour obtenir les valeurs de tan delta (i.e. tangente δ) utilise un montage de type « encastrement 3 points » (« Dual Cantilever » en anglais) selon la norme ISO 6721-5 de 1996 révisée en 2019 (vibrations en flexion - méthode hors résonance), en se basant sur les principes généraux exposés dans la norme ISO 6721-1. Ce protocole de mesure met en œuvre lesdits balayages en fréquences avec ladite amplitude de déformation sur lesdites éprouvettes rectangulaires sur ladite plage de températures par rapport à la température Tg de la composition (on a mesuré la Tg de chaque composition testée dans la présente description par cette même technique « DMA » à « encastrement 3 points » au moyen desdites éprouvettes rectangulaires de dimensions précitées par des balayages en température à 2,5 µm de déformation, à une fréquence f de 1 Hz et avec une rampe de 3° C / minute). On a utilisé ensuite ledit principe d'équivalence temps-température dit « TTS » (« Time-Temperature Superposition » en anglais), pour construire des courbes maîtresses couvrant la plage de fréquence d'intérêt de 1 à 3000 Hz aux températures voulues.

On notera également que ces caractéristiques spécifiques d'amortissement communes aux compositions selon l'invention rendent celles-ci utilisables pour former tout ou partie d'un dispositif amortisseur de vibrations pour véhicule à moteur, tel qu'un véhicule automobile à moteur thermique, hybride ou électrique, ce dispositif pouvant être ladite pièce structurelle transmettant des vibrations (e.g. reçues des roues du véhicule) ou ledit support antivibratoire réunissant des premier et deuxième éléments rigides en amortissant des vibrations entre eux et en supportant une charge (e.g. un support de liaison reliant le moteur à un élément de la structure du véhicule tel que sa caisse), en remplacement partiel ou total des pièces métalliques utilisées de manière conventionnelle pour un tel dispositif amortisseur qui présentent un poids élevé et un amortissement des vibrations insuffisant auxdites fréquences.

On notera en outre que ladite au moins une des conditions (i), (ii), (iii) précitées, de préférence au moins les conditions (i) et (ii), (ii) et (iii) ou (i) et (iii) et encore plus préférentiellement les trois conditions (i), (ii), (iii), peut ou peuvent être avantageusement vérifiées pour des fréquences de 1 Hz et/ou de 3000 Hz et/ou pour au moins une fréquence intermédiaire par exemple choisie parmi 100 Hz, 200 Hz, 300 Hz, 400 Hz, 500 Hz, 600 Hz, 700 Hz, 800 Hz, 900 Hz, 1000 Hz, 1100 Hz, 1200 Hz, 1300 Hz, 1400 Hz, 1500 Hz, 1600 Hz, 1700 Hz, 1800 Hz, 1900 Hz, 2000 Hz, 2100 Hz, 2200 Hz, 2300 Hz, 2400 Hz, 2500 Hz, 2600 Hz, 2700 Hz, 2800 Hz et 2900 Hz.

En relation avec ledit premier aspect de l'invention, lesdites valeurs de tan delta peuvent avantageusement satisfaire en outre à l'une au moins des conditions (ia), (iia), (iiia) suivantes (de préférence au moins les conditions (ia) et (iia), (iia) et (iiia) ou (ia) et (iiia) et encore plus préférentiellement les trois conditions (ia), (iia), (iiia)), à la fois pour des fréquences de 1 Hz et de 3000 Hz:
(ia) tan delta > 4,30 % à 60° C, de préférence > 4,40 % à 60° C
(iia) tan delta > 4,20 % à 80° C, de préférence > 4,30 % à 80° C,
(iiia) tan delta > 3,90 % à 90° C, de préférence > 4,20 % à 90° C.

En relation avec ces conditions (ia), (iia) et/ou (iiia) dudit premier aspect de l'invention, lesdites valeurs de tan delta peuvent encore plus avantageusement satisfaire en outre à l'une au moins des conditions (ib), (iib), (iiib) suivantes (de préférence au moins les conditions (ib) et (iib), (iib) et (iiib) ou (ib) et (iiib) et encore plus préférentiellement les trois conditions (ib), (iib), (iiib)), à la fois pour des fréquences de 1 Hz et 100 Hz:
(ib) tan delta > 4,80 % à 60° C, de préférence > 5,20 % à 60° C et par exemple > 6,00 à 60° C
(iib) tan delta > 5,00 % à 80° C, de préférence > 5,50 % à 80° C et par exemple > 7,00 à 80° C,
(iiib) tan delta > 5,50 % à 90° C, de préférence > 6,00 % à 90° C et par exemple > 7,50 à 90° C.

En relation avec ledit premier aspect de l'invention, la composition peut avantageusement présenter :
- à 23° C après un conditionnement sec comme à l'état moulé (« DAM » en anglais), l'une au moins des propriétés suivantes mesurées selon la norme ISO 527:
   un module d'Young > 14,7 GPa et de préférence > 16,0 GPa,
   une contrainte à la rupture > 200 MPa et de préférence > 220 MPa,
   un allongement à la rupture > 2,1 % et de préférence > 2,6 % ; et/ou
- à 120° C après ledit conditionnement sec comme à l'état moulé (DAM), l'une au moins des propriétés suivantes mesurées selon la norme ISO 527:
   un module d'Young > 4,6 GPa et de préférence > 5,2 GPa,
   une contrainte à la rupture > 80 MPa et de préférence > 90 MPa,
   un allongement à la rupture ≥ 2,0 % et de préférence > 4,0 %.

On notera que ces propriétés mécaniques après conditionnement sec d'une composition selon l'invention sont au moins égales et le plus souvent améliorées par rapport à celles de ladite composition témoin correspondante.

En relation avec ledit premier aspect de l'invention, la composition peut également avantageusement présenter:
- à 23° C après ledit conditionnement humide dans de l'air à 50 % d'humidité relative (RH50) tel que défini ci-dessus, l'une au moins des propriétés suivantes mesurées selon la norme ISO 527:
   un module d'Young ≥ 12,0 GPa et de préférence > 13,5 GPa,
   une contrainte à la rupture > 165 MPa et de préférence > 180 MPa,
   un allongement à la rupture > 3,0 % et de préférence > 3,3 % ; et/ou
- à 120° C après ledit conditionnement humide dans de l'air à 50 % d'humidité relative (RH50), l'une au moins des propriétés suivantes mesurées selon la norme ISO 527:
   un module d'Young ≥ 4,8 GPa et de préférence > 6,0 GPa,
   une contrainte à la rupture ≥ 73 MPa et de préférence ≥ 81 MPa,
   un allongement à la rupture > 3,5 % et de préférence > 6,0 %.

On notera que ces propriétés mécaniques après conditionnement humide d'une composition selon l'invention sont au moins égales et le plus souvent améliorées par rapport à celles de ladite composition témoin correspondante.

Selon une caractéristique préférentielle dudit premier aspect de l'invention, le ratio massique dudit au moins un polyamide aliphatique sur ledit au moins un polyphtalamide est inclusivement compris entre 1,1 et 5,0, de préférence entre 1,5 et 4,5 et encore plus préférentiellement entre 2,1 et 4,0.

On notera que ce ratio massique polyamide(s) aliphatique(s) / PPA(s) supérieur à 1 permet avantageusement de rendre les compositions selon l'invention aptes à être mises en œuvre similairement à ladite composition témoin correspondante.

Selon une autre caractéristique préférentielle dudit premier aspect de l'invention, la composition est dépourvue de tout agent compatibilisant ou de mise en œuvre, étant par exemple dépourvue de toute polyoléfine et de tout polyéther contrairement à la composition de l'art antérieur divulguée par JP 4 441 855 B2 qui préconise d'utiliser un tel agent compatibilisant.

Encore plus préférentiellement selon ledit premier aspect de l'invention, la composition est exclusivement constituée dudit au moins un polyamide aliphatique, dudit au moins un polyphtalamide et de ladite charge renforçante.

Selon une autre caractéristique préférentielle dudit premier aspect de l'invention, la composition comprend, selon les fractions massiques suivantes :
- ledit au moins un polyamide aliphatique selon 20 % à 55 %, de préférence 25 % à 50 %,
- ledit au moins un polyphtalamide selon 5 % à 30 %, de préférence 10 % à 27 %,
- lesdites fibres de verre selon 20 % à 55 %, de préférence 25 % à 50 %.

Selon encore une autre caractéristique préférentielle dudit premier aspect de l'invention, ladite charge renforçante est constituée desdites fibres de verre. En d'autres termes, la composition peut être alors totalement dépourvue de toute charge organique ou inorganique autre que des fibres de verre, la composition pouvant alors comprendre ladite charge renforçante selon une fraction massique de 20 % à 55 %, de préférence de 25 % à 50 %.

On notera qu'une fraction de fibres de verre supérieure à 55 % dans la composition de l'invention n'est pas préférable, vu qu'elle serait susceptible de pénaliser les performances d'amortissement de la composition (i.e. d'abaisser la valeur maximale précitée de tan delta).

Selon un second aspect de l'invention indépendant dudit premier aspect de l'invention et de ses caractéristiques avantageuses et préférentielles précitées, une composition polymérique thermoplastique selon l'invention comprend :
- au moins un polyamide aliphatique tel que défini ci-dessus,
- au moins un polyphtalamide tel que défini ci-dessus, issu au moins en partie d'une diamine aliphatique ayant de 6 à 12 atomes de carbone et d'un acide dicarboxylique aromatique comprenant de l'acide téréphtalique, le ratio massique dudit au moins un polyamide aliphatique sur ledit au moins un polyphtalamide étant supérieur à 1, et
- une charge renforçante comme définie ci-dessus comprenant des fibres de verre. Selon ce second aspect de l'invention, la composition est dépourvue de tout agent compatibilisant ou de mise en œuvre, étant par exemple dépourvue de toute polyoléfine et de tout polyéther, et elle satisfait à la condition (c1) ci-après :
   (c1) : ledit au moins un polyphtalamide est choisi dans le groupe constitué par les polyamides PA 6T, les polyamides PA 9T, les polyamides PA 10T, les copolyamides PA 6T/X, les copolyamides PA 10T/X, et les mélanges d'au moins deux de ces polyphtalamides, où X est au moins un autre motif polyamide issu d'une diamine aliphatique ayant de 6 à 12 atomes de carbone et d'un acide dicarboxylique aromatique comprenant de l'acide téréphtalique ou isophtalique, X étant par exemple égal à 66/6I ou à 6I dans PA 6T/X et étant issu d'une diamine aliphatique ayant de 6 à 9 atomes de carbone dans PA 10T/X.

On notera que ladite condition (c1) peut également caractériser la composition selon ledit premier aspect de l'invention défini ci-dessus, notamment par lesdites conditions (i) à (iii), (ia) à (iiia) et (ib) à (iiib) et/ou par les propriétés mécaniques précitées.

Selon une caractéristique préférentielle dudit second aspect de l'invention, le ratio massique dudit au moins un polyamide aliphatique sur ledit au moins un polyphtalamide est inclusivement compris entre 1,1 et 5,0, de préférence entre 1,5 et 4,5 et encore plus préférentiellement entre 2,1 et 4,0.

Selon une autre caractéristique préférentielle dudit second aspect de l'invention, la composition comprend selon les fractions massiques suivantes :
- ledit au moins un polyamide aliphatique selon 20 % à 55 %, de préférence 25 % à 50 %,
- ledit au moins un polyphtalamide selon 5 % à 30 %, de préférence 10 % à 27 %,
- lesdites fibres de verre selon 20 % à 55 %, de préférence 25 % à 50 %.

Selon une autre caractéristique préférentielle dudit second aspect de l'invention, ladite charge renforçante est constituée desdites fibres de verre.

Encore plus préférentiellement selon ledit second aspect de l'invention, la composition est exclusivement constituée dudit au moins un polyamide aliphatique, dudit au moins un polyphtalamide et de ladite charge renforçante.

En relation avec ledit premier aspect ou ledit second aspect de l'invention définis ci-dessus, ledit au moins un polyphtalamide est :
- de préférence choisi parmi les PA 10T/X, étant issu de 1,10-décaméthylène diamine et d'acide téréphtalique et d'un motif X issu d'une diamine aliphatique ayant de 6 à 9 atomes de carbone et d'acide téréphtalique ;
- encore plus préférentiellement constitué d'un PA 10T/X avec X choisi parmi PA 6T et PA 6-3-T, de préférence avec un ratio molaire PA 10T : X supérieur à 1, étant dans ce cas encore plus préférentiellement constitué
   * d'un PA 10T/PA 6T, avec un ratio molaire PA 10T : PA 6T inclusivement compris entre 8 et 10 et de préférence entre 8,5 et 9,5 ; ou
   * d'un PA 10T/PA 6-3-T, avec un ratio molaire PA 10T : PA 6-3-T inclusivement compris entre 1,1 et 10, étant dans ce dernier cas plus préférentiellement constitué
      * d'un PA 10T/PA 6-3-T de masse moléculaire moyenne en nombre mesurée par GPC comprise entre 10000 et 12000 g/mol, de préférence entre 10700 et 11700 g/mol, avec ledit ratio molaire PA 10T : PA 6-3-T inclusivement compris entre 1,2 et 2 et de préférence entre 1,3 et 1,7 ; ou
      * d'un PA 10T/PA 6-3-T de masse moléculaire moyenne en nombre mesurée par GPC comprise entre 12000 et 14000 g/mol, de préférence entre 12500 et 13500 g/mol, avec ledit ratio molaire PA 10T : PA 6-3-T inclusivement compris entre 8 et 10 et de préférence entre 8,5 et 9,5.

En relation avec ledit premier aspect ou ledit second aspect de l'invention définis ci-dessus, une composition selon l'invention peut comprendre le produit d'un mélangeage par voie fondue dudit au moins un polyamide aliphatique, dudit au moins un polyphtalamide et de ladite charge renforçante, de préférence par extrusion.

Un procédé de préparation d'une composition selon l'un ou l'autre dudit premier aspect et dudit second aspect de l'invention est tel que l'on met en œuvre un mélangeage par voie fondue, dans une extrudeuse par exemple bi-vis, dudit au moins un polyamide aliphatique, dudit au moins un polyphtalamide et de ladite charge renforçante, de préférence sans utiliser d'agent compatibilisant ou de mise en œuvre tel qu'une polyoléfine ou un polyéther.

Selon une autre caractéristique préférentielle de ce procédé selon l'invention, on met en œuvre une étape de pré-mélangeage dudit au moins un polyamide aliphatique et dudit au moins un polyphtalamide, avant d'introduire dans l'extrudeuse ladite charge renforçante de préférence constituée desdites fibres de verre.

Un dispositif à fonction dynamique pour véhicule à moteur selon l'invention, apte à amortir des vibrations en particulier dans une plage de fréquences allant de 1 à 3000 Hz et à une température de 60 à 90° C, est tel que le dispositif comprend une composition selon ledit premier aspect ou second aspect de l'invention définis ci-dessus, le dispositif pouvant être dépourvu de toute partie métallique et étant de préférence constitué de ladite composition moulée par injection ou bien de ladite composition moulée par injection qui est solidaire d'un insert métallique par exemple fileté (l'insert métallique éventuel étant minoritaire en masse dans le dispositif par rapport à la composition moulée dont la fraction masse dans le dispositif peut ainsi varier de 80 % à 100 %, par exemple).

Avantageusement, ledit dispositif est apte à équiper un véhicule automobile à moteur thermique, hybride ou électrique, et est choisi parmi les pièces structurelles transmettant des vibrations (e.g. pièces adaptées pour être reliées aux roues du véhicule de sorte à en recevoir les vibrations) et les supports antivibratoires réunissant des premier et deuxième éléments rigides en amortissant des vibrations entre eux et en supportant une charge, le support antivibratoire étant de préférence un support de liaison reliant le moteur à un élément de la structure du véhicule, tel qu'un longeron de sa caisse.

### Brève description des dessins

D'autres caractéristiques, avantages et détails de la présente invention ressortiront à la lecture de la description suivante de plusieurs exemples de réalisation de l'invention, donnés à titre illustratif et non limitatif en relation avec les dessins joints, parmi lesquels :
**Fig. 1**

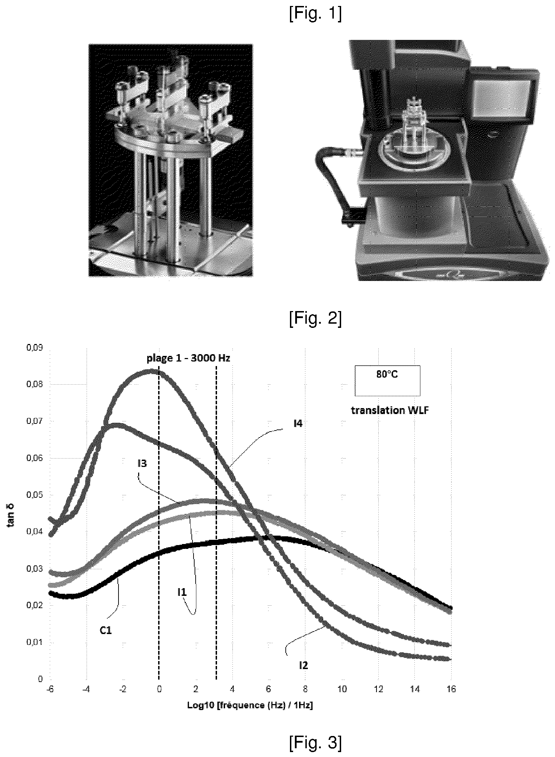

   [Fig. 1] représente deux photographies, la photographie de gauche montrant un appareil « DMA Q800 » de TA Instruments utilisée pour l'analyse mécanique dynamique (« DMA ») selon l'invention afin d'obtenir les valeurs d'amortissement (tan delta) en fonction de la fréquence, et la photographie de droite montrant un montage de type « encastrement trois points » utilisé pour cette analyse mécanique dynamique (« DMA ») en relation avec cet appareil.
**Fig. 2**
   [Fig. 2] est un graphique montrant les propriétés d'amortissement (tan delta) obtenues à 80° C en fonction de la fréquence (Hz) avec l'appareil et le montage de la figure 1, pour une composition témoin C1 de type PA66 GF50 et quatre compositions selon l'invention I1, I2, I3, I4 comprenant un copolymère PA 10T/X en plus du PA 66, toutes conditionnées sous atmosphère humide selon ledit conditionnement RH50 tel que défini ci-dessus.
**Fig. 3**
   [Fig. 3] est un graphique montrant les propriétés d'amortissement (tan delta) obtenues à 80° C en fonction de la fréquence (Hz) avec l'appareil et le montage de la figure 1, pour le PA 66 et deux PA 10T/X des compositions 11-12 et I3-I4, tous conditionnés sous atmosphère humide selon ledit conditionnement RH50 tel que défini ci-dessus.
**Fig. 4**

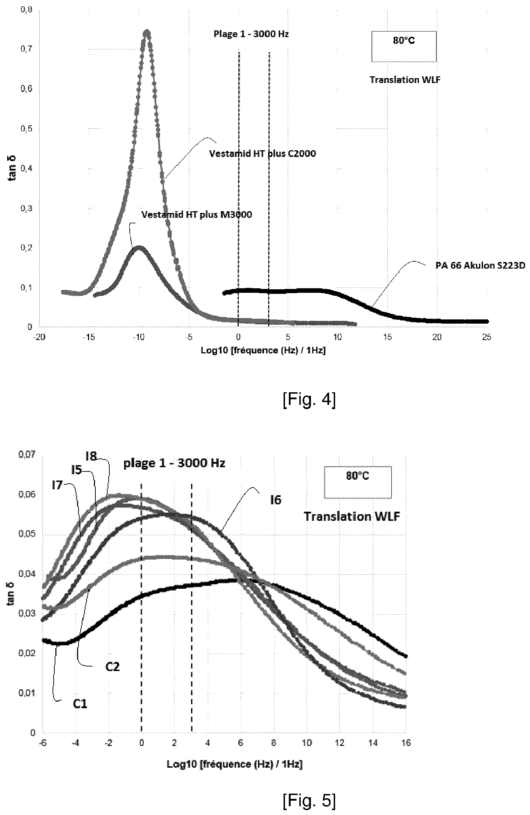

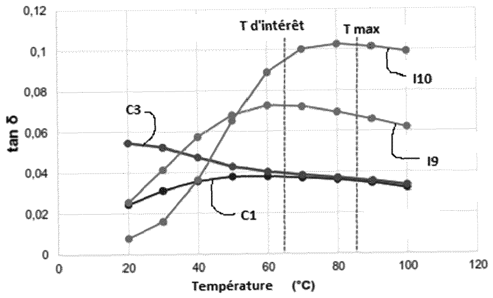

   [Fig. 4] est un graphique montrant les propriétés d'amortissement (tan delta) obtenues à 80° C en fonction de la fréquence (Hz) avec l'appareil et le montage de la figure 1, pour la composition témoin C1, une composition C2 non conforme à l'invention comprenant un alliage PA 66 + PA 4T et quatre autres compositions selon l'invention I5, I6, I7, I8, comprenant en plus du PA 66 respectivement un PA 6T/X, un PA 9T, un autre PA 10T/X et un PA 10T, toutes conditionnées sous atmosphère humide selon ledit conditionnement RH50 tel que défini ci-dessus.
**Fig. 5**
   [Fig. 5] est un graphique montrant les propriétés d'amortissement (tan delta moyenne entre 1 et 3000 Hz) obtenues en fonction de la température (° C) avec l'appareil et le montage de la figure 1, pour les compositions témoin C1, C3 de type PA6 GF50 et les compositions selon l'invention I9, I10 comprenant un alliage PA 6 + PA 10T/X, toutes conditionnées sous atmosphère humide selon ledit conditionnement RH50 tel que défini ci-dessus.

### Exemples de réalisation de l'invention

Dans tous les exemples suivants, on a préparé les compositions C1-C2 et I1-I8 par voie fondue sans aucun agent compatibilisant ou de mise en œuvre, comme suit (fractions massiques des ingrédients dans chaque composition en %).

### Formulations des compositions testées C1-C4 non conformes à l'invention et I1-I16 selon l'invention, et ingrédients utilisés

**Avec du PA 66 et 50** % **de fibres de verre** :
- **C1** : PA66 GF50, avec 50 % d'un PA 66 « Akulon S223D » (DSM) et 50 % de fibres de verre « DS 1128-10N » (3B).
- **I1** : 40 % du PA 66 « Akulon S223D » (DSM), 10 % du **PA 10T/X** « Vestamid HT plus M3000 » (Evonik) et 50 % des fibres de verre « DS 1128-10N ».
- **I2** : 30 % du PA 66 « Akulon S223D » (DSM), 20 % du **PA 10T/X** « Vestamid HT plus M3000 » (Evonik) et 50 % des fibres de verre « DS 1128-10N ».
- **I3** : 40 % du PA 66 « Akulon S223D » (DSM), 10 % du **PA 10T/X** « Vestamid HT plus C2000 » (Evonik) et 50 % des fibres de verre « DS 1128-10N ».
- **I4** : 30 % du PA 66 « Akulon S223D » (DSM), 20 % du **PA 10T/X** « Vestamid HT plus C2000 » (Evonik) et 50 % des fibres de verre « DS 1128-10N ».
- **C2 :** 30 % du PA 66 « Akulon S223D » (DSM), 20 % du **PA 4T** « ForTii Ace XTR31 » (DSM) et 50 % des fibres de verre « DS 1128-10N ».
- **I5 :** 30 % du PA 66 « Akulon S223D » (DSM), 20 % du **PA 6T/X** « Vestamid HT plus M1000 » (PA 6T/66/6I d'Evonik) et 50 % des fibres de verre « DS 1128-10N ».
- **I6** : 30 % du PA 66 « Akulon S223D » (DSM), 20 % du **PA 9T** « Genestar N1000 A » (Kuraray) et 50 % des fibres de verre « DS 1128-10N ».
- **I7** : 30 % du PA 66 « Akulon S223D » (DSM), 20 % du **PA 10T/X** « Grivory HT3Z (EMS Grivory) » et 50 % des fibres de verre « DS 1128-10N ».
- **I8** : 30 % du PA 66 « Akulon S223D » (DSM), 20 % du **PA 10T** « Badamid 10T » (Bada) et 50 % des fibres de verre « DS 1128-10N ».

### Avec du PA 6 et 50 % de fibres de verre :

- **C3 :** PA6 GF50, avec 50 % d'un PA 6 « Akulon F136DH » (DSM) et 50 % de fibres de verre « DS 1128-10N » (3B).
- **I9** : 40 % du PA 6 « Akulon F136DH » (DSM), 10 % du **PA 10T/X** « Vestamid HT plus C2000 » (Evonik) et 50 % des fibres de verre « DS 1128-10N ».
- **I10** : 30 % du PA 6 « Akulon F136DH » (DSM), 20 % du **PA 10T/X** « Vestamid HT plus C2000 » (Evonik) et 50 % des fibres de verre « DS 1128-10N ».
- **I11** : 40 % du PA 6 « Akulon F136DH » (DSM), 10 % du **PA 10T/X** « Vestamid HT plus M3000 » (Evonik) et 50 % des fibres de verre « DS 1128-10N ».
- **I12 :** 30 % du PA 6 « Akulon F136DH » (DSM), 20 % du **PA 10T/X** « Vestamid HT plus M3000 » (Evonik) et 50 % des fibres de verre « DS 1128-10N ».

### Avec du PA 6 et 35 % de fibres de verre :

- **C4** : PA6 GF35, avec 65 % d'un PA 6 « Akulon F136DH » (DSM) et 35 % de fibres de verre « DS 1128-10N » (3B).
- **I13 :** 52 % du PA 6 « Akulon F136DH » (DSM), 13 % du **PA 10T/X** « Vestamid HT plus C2000 » (Evonik) et 35 % des fibres de verre « DS 1128-10N ».
- **I14 :** 50 % du PA 6 « Akulon F136DH » (DSM), 15 % du **PA 10T/X** « Vestamid HT plus C2000 » (Evonik) et 35 % des fibres de verre « DS 1128-10N ».
- **I15 :** 45 % du PA 6 « Akulon F136DH » (DSM), 20 % du **PA 10T/X** « Vestamid HT plus C2000 » (Evonik) et 35 % des fibres de verre « DS 1128-10N ».
- **I16 :** 39 % du PA 6 « Akulon F136DH » (DSM), 26 % du **PA 10T/X** « Vestamid HT plus C2000 » (Evonik) et 35 % des fibres de verre « DS 1128-10N ».

Chem. 1 représente la formule chimique semi-développée commune au copolymère PA 10T/X « Vestamid HT plus M3000 » (grade usuellement préconisé pour l'extrusion) présent dans chacune des compositions I1-I2, et au copolymère PA 10T/X « Vestamid HT plus C2000 » (grade usuellement préconisé pour l'injection) présent dans chacune des compositions I3-I4, formule obtenue par analyse via la technique RMN ¹H avec X = PA 6-3-T. Ces deux copolymères répondent ainsi chacun à la formule PA 10T/ PA 6-3-T.

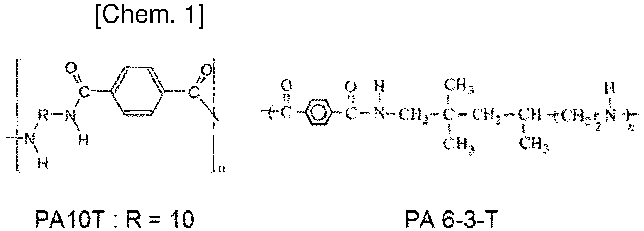

Pour le PA 10T/ PA 6-3-T « Vestamid HT plus M3000 » des compositions I1-I2, l'analyse RMN ¹H a donné un ratio molaire bloc PA 10 T : bloc PA 6-3-T de 90 : 10 (incertitude de ± 5 %). On a évalué la masse moléculaire moyenne en nombre Mn de ce PA 10T/ PA 6-3-T à 13000 g/mol par GPC, ce qui donne un degré de polymérisation moyen en nombre (DPn) de 38,7 pour les blocs PA 10T et de 4,5 pour les blocs PA 6-3-T.

Pour le PA 10T/ PA 6-3-T « Vestamid HT plus C2000 » des compositions I3-I4, l'analyse RMN ¹H a donné un ratio molaire bloc PA 10 T : bloc PA 6-3-T de 60 : 40 (incertitude de ± 5 %). On a évalué la masse moléculaire moyenne en nombre Mn de ce PA 10T/ PA 6-3-T à 11200 g/mol par GPC, ce qui donne un degré de polymérisation moyen en nombre (DPn) de 22,3 pour les blocs PA 10T et de 15,6 pour les blocs PA 6-3-T.

Chem. 2 représente la formule chimique semi-développée du copolymère PA 10T/X « Grivory HT3Z » (grade usuellement préconisé pour l'extrusion) de la composition I7, formule obtenue par analyse via la technique RMN ¹H avec X = PA 6T. Ce copolymère répond ainsi à la formule PA 10T/ PA 6T.

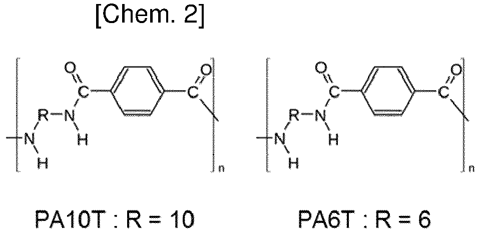

Pour ce PA 10T/ PA 6T « Grivory HT3Z » de la composition I7, l'analyse RMN ¹H a donné un ratio molaire bloc PA 10 T : bloc PA 6T de 90 : 10 (incertitude de ± 5 %).

### Procédé de préparation des compositions testées C1-C4 et I1-I16

On a mis en œuvre les mélanges physiques des compositions C1-C4 et I1-I16 par extrusion dans une extrudeuse bi-vis « Leistritz » de type ZSE40MAXX (L/D 40). Le tableau 1 ci-après indique les formulations (fractions massiques) et paramètres d'extrusion des compositions C1 et I1-I4.

**[Tableau 1]**

| **Ingrédients** | | **C1** | **I1-I2** | **I3-I4** |
|---|---|---|---|---|
| PA 66 | Akulon S223D | 50% | 40-30 % | 40-30 % |
| PA 10T/X | Vestamid HT plus M3000 | 0 | 10-20 % | 0 |
| PA 10T/X | Vestamid HT plus C2000 | 0 | 0 | 10-20 % |
| Fibres de verre | DS 1128-10N | 50% | 50% | 50% |

| **Paramètres d'extrusion** | | **C1** | **I1-I2** | **I3-I4** |
|---|---|---|---|---|
| Température matière en sortie (° C) | | 302 | 305 | 305 |
| Puissance (%) | | 51 | 55 | 48 |
| Vitesse de la vis (tours/min.) | | 250 | 250 | 250 |
| Débit total (kg/h) | | 60 | 60 | 60 |
| Vitesse de gavage (tours/min.) | | 80 | 80 | 80 |
| Nombre de trous de la filière | | 2 | 2 | 2 |
| Nombre de couteaux | | 7 | 7 | 7 |
| Vitesse des couteaux (tours/min.) | | 4200 | 4200 | 440 |
| Pression en sortie (10⁵ Pa) | | 84 | 83 | 79 |

Le tableau 2 ci-après indique les formulations (fractions massiques) et paramètres d'extrusion des compositions C1-C2 et I5-I8.

**[Tableau 2]**

| **Ingrédients** | | **C1** | **C2** | **I5** | **I6** | **I7** | **I8** |
|---|---|---|---|---|---|---|---|
| PA 66 | Akulon S223D | 50% | 30% | 30% | 30% | 30% | 30% |
| PA 4T | ForTii Ace XTR31 | 0 | 20% | 0 | 0 | 0 | 0 |
| PA6T/X | Vestamid HT plus M1 000 | 0 | 0 | 20% | 0 | 0 | 0 |
| PA9T | Genestar N1000A | 0 | 0 | 0 | 20% | 0 | 0 |
| PA 10T/X | Grivory HT3Z | 0 | 0 | 0 | 0 | 20% | 0 |
| PA10T | Badamid 10T | 0 | 0 | 0 | 0 | 0 | 20% |
| Fibres de verre | DS 1128-10N | 50% | 50% | 50% | 50% | 50% | 50% |

| **Paramètres de mise en œuvre** | | **C1** | **C2** | **I5** | **I6** | **I7** | **I8** |
|---|---|---|---|---|---|---|---|
| Température matière en sortie en (° C) | | 302 | 304 | 303 | 307 | 303 | 306 |
| Puissance (%) | | 51 | 44 | 56 | 51 | 51 | 46 |
| Vitesse de la vis (tours/min.) | | 250 | 250 | 250 | 250 | 250 | 250 |
| Débit total (kg/h) | | 60 | 60 | 60 | 60 | 60 | 60 |
| Vitesse de gavage (tours/min.) | | 80 | 80 | 80 | 80 | 80 | 80 |
| Nombre de trous de la filière | | 2 | 2 | 2 | 2 | 2 | 2 |
| Nombre de couteaux | | 7 | 7 | 7 | 7 | 7 | 7 |
| Vitesse des couteaux (tours/min.) | | 4200 | 5000 | 4200 | 4500 | 5000 | 4500 |
| Pression en sortie (10⁵ Pa) | | 84 | 51 | 81 | 57 | 45 | 46 |

Le tableau 3 ci-après indique les formulations (fractions massiques) et paramètres d'extrusion des compositions C3 et I9-I12.

**[Tableau 3]**

| **Ingrédients** | | **C3** | **I9** | **I10** | **I11** | **I12** |
|---|---|---|---|---|---|---|
| PA 6 | Akulon F136 DH | 50% | 40% | 30% | 40% | 30% |
| PA 1 0T/X | Vestamid HT plus C2000 | 0 | 10% | 20% | 0 | 0 |
| PA 1 0T/X | Vestamid HT plus M3000 | 0 | 0 | 0 | 10% | 20% |
| Fibres de verre | DS 1128-10N | 50% | 50% | 50% | 50% | 50% |

| **Paramètres de mise en œuvre** | | **C3** | **I9** | **I10** | **I11** | **I12** |
|---|---|---|---|---|---|---|
| Température matière en sortie en (° C) | | 252 | 257 | 259 | 256 | 259 |
| Puissance (%) | | 73 | 77 | 70 | 75 | 68 |
| Vitesse de la vis (tours/min.) | | 280 | 250 | 250 | 250 | 250 |
| Débit total (kg/h) | | 60 | 60 | 60 | 60 | 60 |
| Vitesse de gavage (tours/min.) | | 80 | 80 | 80 | 80 | 80 |
| Nombre de trous de la filière | | 2 | 2 | 2 | 2 | 2 |
| Nombre de couteaux | | 7 | 7 | 7 | 7 | 7 |
| Vitesse des couteaux (tours/min.) | | 3600 | 4000 | 4000 | 4000 | 3600 |
| Pression en sortie (10⁵ Pa) | 92 | 110 | 115 | 106 | 97 | |

Le tableau 4 ci-après indique les formulations (fractions massiques) et paramètres d'extrusion des compositions C4 et 113-116.

**[Tableau 4]**

| **Ingrédients** | | **C4** | **I13** | **I14** | **I15** | **I16** |
|---|---|---|---|---|---|---|
| PA 6 | Akulon F136 DH | 65% | 52% | 50% | 45% | 39% |
| PA10T/X | Vestamid HT plus C2000 | 0 | 13% | 15% | 20% | 26% |
| Fibres de verre | DS 1128-10N | 35% | 35% | 35% | 35% | 35% |

| **Paramètres de mise en œuvre** | | **C4** | **I13** | **I14** | **I15** | **I16** |
|---|---|---|---|---|---|---|
| Température matière en sortie en (° C) | | 253 | 256 | 257 | 257 | 253 |
| Puissance (%) | | 74 | 68 | 61 | 52 | 60 |
| Vitesse de la vis (tours/min.) | | 280 | 280 | 280 | 280 | 280 |
| Débit total (kg/h) | | 60 | 60 | 50 | 50 | 60 |
| Vitesse de gavage (tours/min.) | | 80 | 80 | 80 | 80 | 80 |
| Nombre de trous de la filière | | 2 | 2 | 2 | 2 | 2 |
| Nombre de couteaux | | 7 | 7 | 7 | 7 | 7 |
| Vitesse des couteaux (tours/min.) | | 3600 | 3600 | 4000 | 4000 | 3600 |
| Pression en sortie (10⁵ Pa) | | 90 | 89 | 86 | 62 | 71 |

On a pré-mélangé des granulés de PA66 ou de PA6 selon les compositions et du PPA (i.e. du PA10T/X pour I1-I4, I7, I9-I16, du PA 4T pour C2, du PA 6T/X pour I5, du PA 9T pour I6 et du PA 10T pour I8), puis on les a introduits dans l'extrudeuse à l'aide d'un doseur, et l'on a ensuite introduit les fibres de verre dans l'extrudeuse au niveau de la zone Z6 de celle-ci à l'aide d'un gaveur latéral. Comme visible aux tableaux 1 à 4, on peut noter que l'incorporation du PPA aux compositions I1-I16 n'a pas entraîné de modification majeure des paramètres de mise en œuvre des compositions 11-116.

On a mesuré les températures de transition vitreuse Tg des compositions obtenues par la technique précitée « DMA » à « encastrement 3 points » au moyen desdites éprouvettes rectangulaires de dimensions 34,81 * 4 * 2 mm par des balayages en température à 2,5 µm de déformation, à une fréquence f de 1 Hz et avec une rampe de 3° C / minute. Le tableau 5 ci-après présente à titre d'exemples les valeurs ainsi obtenues pour les compositions C1, C2 et I1-I8.

**[Tableau 5]**

| Compositions | C1 | C2 | I1 | I2 | I3 | I4 | I5 | I6 | I7 | I8 |
|---|---|---|---|---|---|---|---|---|---|---|
| Tg (° C) | 32 | 61 | 73 | 86 | 67 | 80 | 83 | 60 | 77 | 75 |

### Propriétés mécaniques statiques des compositions C1-C4 et I1-I16

Les tableaux 6 et 7 ci-après détaillent chacun les propriétés statiques obtenues pour des éprouvettes de type H2 moulées par injection constituées des compositions C1-C2 et 11-18, mesurées à deux températures de 23 et 120° C soit à l'état initial précité « DAM » (i.e. après séchage des éprouvettes H2 pendant 4 heures à 80° C), soit après ledit conditionnement humide RH50 ultérieur tel que défini ci-dessus. On a suivi la norme ISO 527 pour mesurer ces propriétés.

**[Tableau 6]**

| **Conditions de test** | **Propriétés** | **C1** | **I1** | **I2** | **I3** | **I4** |
|---|---|---|---|---|---|---|
| 23° C DAM | Module d'Young (GPa) | 14,7 | 14,9 | 15,6 | 16,5 | 14,9 |
| | *écart type* | 0,7 | *0,6* | *0,6* | *0,1* | *0,3* |
| | Contrainte rupture (MPa) | 194 | 209 | 221 | 206 | 209 |
| | *écart type* | *4* | *5* | *4* | *6* | *4* |
| | Allongement rupture (%) | 2,4 | 2,3 | 2,7 | 2,2 | 2,4 |
| | *écart type* | *0,1* | *0,1* | *0,2* | *0,2* | *0,1* |
| 120° C DAM | Module d'Young (GPa) | 6,0 | 6,2 | 5,3 | 6,7 | 4,7 |
| | *écart type* | *0,4* | *0,3* | *0,2* | *0,6* | *0,2* |
| | Contrainte rupture (MPa) | 100 | 100 | 90 | 103 | 85 |
| | *écart type* | *3* | *3* | *3* | *3* | *1* |
| | Allongement rupture (%) | 4,4 | 6,2 | 7,9 | 5,7 | 2,0 |
| | *écart type* | *0,6* | *0,4* | *0,9* | *0,6* | *0,2* |
| 23° C RH50 | Taux d'humidité (%) | 1,20 | 1,17 | 0,91 | 1,10 | 0,94 |
| | Module d'Young (GPa) | 11,2 | 12,2 | 14,3 | 12,0 | 14,2 |
| | *écart type* | *0,6* | *0,7* | *0,6* | *0,5* | *0,7* |
| | Contrainte rupture (MPa) | 148 | 167 | 187 | 175 | 189 |
| | *écart type* | *6* | *6* | *9* | *3* | *5* |
| | Allongement rupture (%) | 2,8 | 3,4 | 3,5 | 3,4 | 3,2 |
| | *écart type* | *0,4* | *0,2* | *0,3* | *0,1* | *0,3* |
| 120° C RH50 | Taux d'humidité (%) | 1,20 | 1,17 | 0,91 | 1,10 | 0,94 |
| | Module d'Young (GPa) | 5,6 | 6,3 | 5,6 | 6,1 | 5,3 |
| | *écart type* | *0,4* | *0,3* | *0,4* | *0,1* | *0,5* |
| | Contrainte rupture (MPa) | 87 | 90 | 81 | 89 | 81 |
| | *écart type* | *4* | *3* | *2* | *3* | *1* |
| | Allongement rupture (%) | 4,5 | 6,3 | 8,4 | 6,3 | 8,4 |
| | *écart type* | *0,8* | *5,2* | *0,1* | *0,7* | *1,2* |

A 23° C, le tableau 6 montre globalement une amélioration des propriétés mécaniques des compositions I1-I4 de l'invention par rapport à la composition C1 grâce à l'ajout d'un PA10T/X au PA 66, cette amélioration étant particulièrement nette après ledit conditionnement RH50 où l'on a observé que les compositions I1-I4 étaient bien moins sensibles à la reprise en humidité que la composition C1.

A 120° C, le tableau 6 montre que cette amélioration des propriétés mécaniques concernait plus particulièrement les compositions I1 et I3 avec une fraction massique de PA10T/X de 10 %, en comparaison des compositions I2 et I4 caractérisées par une fraction massique de PA10T/X de 20 %.

**[Tableau 7]**

| **Conditions de test** | **Propriétés** | **C1** | **C2** | **I5** | **I6** | **I7** | **I8** |
|---|---|---|---|---|---|---|---|
| **23° C DAM** | Module d'Young (GPa) | 14,7 | 16,9 | 17,4 | 16,0 | 15,2 | 14,8 |
| | *écart type* | 0,7 | *0,8* | *0,4* | *1,6* | *1,0* | *0,4* |
| | Contrainte rupture (MPa) | 194 | 163 | 230 | 228 | 201 | 223 |
| | *écart type* | *4* | *4* | *1* | *5* | *7* | *4* |
| | Allongement rupture (%) | 2,4 | 1,6 | 2,5 | 2,9 | 2,9 | 2,8 |
| | *écart type* | *0,1* | *0,1* | *0,1* | *0,1* | *0,2* | *0,1* |
| **120° C DAM** | Module d'Young (GPa) | 6,0 | 6,5 | 5,7 | 6,2 | 5,4 | 5,6 |
| | *écart type* | *0,4* | *0,7* | *0,1* | *0,8* | *0,4* | *0,2* |
| | Contrainte rupture (MPa) | 100 | 81 | 100 | 103 | 91 | 100 |
| | *écart type* | *3* | *1* | *1* | *5* | *3* | *1* |
| | Allongement rupture (%) | 4,4 | 4,2 | 7,0 | 8,7 | 9,2 | 8,3 |
| | *écart type* | *0,6* | *0,3* | *0,4* | *0,9* | *0,7* | *0,2* |
| **23° C RH50** | Taux d'humidité (%) | 1,20 | 0,83 | 0,91 | 0,68 | 0,66 | 0,63 |
| | Module d'Young (GPa) | 11,2 | 13,8 | 14,2 | 15,0 | 14,0 | 14,3 |
| | *écart type* | *0,6* | *0,3* | *0,4* | *0,5* | *0,8* | *0,9* |
| | Contrainte rupture (MPa) | 148 | 138 | 201 | 207 | 184 | 198 |
| | *écart type* | *6* | *1* | *4* | *3* | *5* | *6* |
| | Allongement rupture (%) | 2,8 | 1,9 | 3,2 | 3,3 | 3,1 | 3,3 |
| | *écart type* | *0,4* | *0,1* | *0,3* | *0,1* | *0,1* | *0,1* |
| **120° C RH50** | Taux d'humidité (%) | 1,20 | 0,83 | 0,91 | 0,68 | 0,66 | 0,63 |
| | Module d'Young (GPa) | 5,6 | 6,4 | 5,6 | 6,3 | 5,3 | 4,8 |
| | *écart type* | *0,4* | *0,3* | *0,2* | *0,6* | *0,2* | *0,1* |
| | Contrainte rupture (MPa) | 87 | 73 | 90 | 97 | 81 | 84 |
| | *écart type* | *4* | *4* | *2* | *2* | *2* | *1* |
| | Allongement rupture (%) | 4,5 | 3,6 | 8,5 | 5,7 | 7,8 | 8,5 |
| | *écart type* | *0,8* | *0,2* | *0,5* | *0,9* | *1,0* | *0,3* |

A 23° C comme à 120° C, le tableau 7 montre globalement une amélioration des propriétés mécaniques des compositions I5-I8 de l'invention par rapport aux compositions C1 et C2 grâce à l'ajout au PA 66 d'un PPA selon l'invention, cette amélioration étant particulièrement nette après ledit conditionnement RH50 où l'on a observé que les compositions I5-I8 étaient bien moins sensibles à la reprise en humidité que les compositions C1 et C2.

Le tableau 8 ci-après détaille les propriétés statiques obtenues pour des éprouvettes de type H2 moulées par injection constituées des compositions C3 et I9-I12, mesurées à deux températures de 23 et 120° C soit à l'état initial précité « DAM » (i.e. après séchage des éprouvettes H2 pendant 4 heures à 80° C), soit après ledit conditionnement humide RH50 ultérieur tel que défini ci-dessus. On a suivi la norme ISO 527 pour mesurer ces propriétés.

**[Tableau 8]**

| **Conditions de test** | **Propriétés** | **C3** | **I9** | **I10** | **I11** | **I12** |
|---|---|---|---|---|---|---|
| 23° C DAM | Module d'Young (GPa) | 13,6 | 14,7 | 13,9 | 15,5 | 15,9 |
| | *écart type* | *0,3* | *0,2* | *0,4* | *0,5* | *1,0* |
| | Contrainte rupture (MPa) | 172 | 195 | 208 | 202 | 203 |
| | *écart type* | *4* | *5* | *2* | *2* | *3* |
| | Allongement rupture (%) | 3,4 | 2,4 | 2,6 | 2,3 | 2,7 |
| | *écart type* | *0,4* | *0,1* | *0,2* | *0,1* | *0,2* |
| 120° C DAM | Module d'Young (GPa) | 4,6 | 4,3 | 3,4 | 4,7 | 4,6 |
| | *écart type* | *0,3* | *0,2* | *0,1* | *0,7* | *0,6* |
| | Contrainte rupture (MPa) | 82 | 70 | 64 | 84 | 84 |
| | *écart type* | *2* | *3* | *4* | *4* | *3* |
| | Allongement rupture (%) | 10,0 | 10,4 | 14,8 | 8,4 | 8,2 |
| | *écart type* | *0,5* | *0,4* | 2,8 | *0,2* | *0,8* |
| 23° C RH50 | Taux d'humidité (%) | 1,43 | 1,28 | 1,09 | 1,31 | 1,04 |
| | Module d'Young (GPa) | 7,8 | 10,3 | 13,4 | 10,1 | 11,8 |
| | *écart type* | *0,2* | *0,5* | *0,2* | *0,4* | *0,6* |
| | Contrainte rupture (MPa) | 124 | 143 | 170 | 147 | 166 |
| | *écart type* | *3* | *2* | *7* | *2* | *2* |
| | Allongement rupture (%) | 7,0 | 5,3 | 3,5 | 4,1 | 3,1 |
| | *écart type* | *0,4* | *0,2* | *0,3* | *0,4* | *0,1* |
| 120° C RH50 | Taux d'humidité (%) | 1,43 | 1,28 | 1,09 | 1,31 | 1,04 |
| | Module d'Young (GPa) | 4,1 | 3,6 | 3,0 | 4,6 | 3,6 |
| | *écart type* | *0,5* | *0,1* | *0,4* | *0,4* | *0,5* |
| | Contrainte rupture (MPa) | 77 | 62 | 62 | 71 | 68 |
| | *écart type* | *2* | *1* | *1* | *2* | *1* |
| | Allongement rupture (%) | 8,4 | 10,6 | 12,4 | 8,6 | 9,7 |
| | *écart type* | *0,5* | *0,9* | *0,3* | *0,6* | *1,3* |

Le tableau 8 montre globalement une amélioration ou au moins un maintien des propriétés mécaniques des compositions I9-I12 de l'invention par rapport à la composition C3 grâce à l'ajout d'un PA10T/X au PA 6.

Le tableau 9 ci-après détaille les propriétés statiques obtenues pour des éprouvettes de type H2 moulées par injection constituées des compositions C4 et 113-116, mesurées à deux températures de 23 et 120° C soit à l'état initial précité « DAM » (i.e. après séchage des éprouvettes H2 pendant 4 heures à 80° C), soit après ledit conditionnement humide RH50 tel que défini ci-dessus. On a suivi la norme ISO 527 pour mesurer ces propriétés.

**[Tableau 9]**

| **Conditions de test** | **Propriétés** | **C4** | **I13** | **I14** | **I15** | **I16** |
|---|---|---|---|---|---|---|
| 23° C DAM | Module d'Young (GPa) | 10,5 | 10,8 | 10,5 | 12,0 | 10,2 |
| | *écart type* | *0,1* | *1,0* | *1,5* | *3,0* | *1,3* |
| | Contrainte rupture (MPa) | 164 | 177 | 185 | 168 | 182 |
| | *écart type* | *2* | *3* | *3* | *6* | *6* |
| | Allongement rupture (%) | 4,1 | 3,9 | 4,2 | 2,9 | 3,5 |
| | *écart type* | *0,1* | *0,3* | *0,2* | *0,1* | *0,2* |
| 120° C DAM | Module d'Young (GPa) | 2,8 | 3,1 | 3,6 | 2,0 | 2,7 |
| | *écart type* | *0,2* | *0,4* | *0,4* | 0,7 | *0,4* |
| | Contrainte rupture (MPa) | 74 | 72 | 76 | 62 | 59 |
| | *écart type* | *3* | *3* | *1* | *4* | *3* |
| | Allongement rupture (%) | 15,8 | 19,1 | 19,9 | 16,1 | 20,4 |
| | *écart type* | *1,1* | *0,7* | *0,9* | *0,2* | *3,4* |
| 23° C RH50 | Taux d'humidité (%) | 2,06 | 1,71 | 1,90 | 1,14 | 1,13 |
| | Module d'Young (GPa) | 5,1 | 6,2 | 6,3 | 6,3 | 11,1 |
| | *écart type* | *0,2* | *0,3* | *0,2* | *0,4* | *1,2* |
| | Contrainte rupture (MPa) | 100 | 122 | 121 | 114 | 163 |
| | *écart type* | *2* | *2* | *4* | *2* | *3* |
| | Allongement rupture (%) | 12,3 | 8,0 | 9,3 | 7,2 | 3,9 |
| | *écart type* | *0,7* | *1,0* | *1,0* | *0,5* | *0,2* |
| 120° C RH50 | Taux d'humidité (%) | 2,06 | 1,71 | 1,90 | 1,14 | 1,13 |
| | Module d'Young (GPa) | 2,7 | 2,8 | 2,6 | 2,3 | 2,3 |
| | *écart type* | *0,3* | *0,3* | *0,3* | *0,2* | *0,6* |
| | Contrainte rupture (MPa) | 70 | 68 | 65 | 53 | 55 |
| | *écart type* | *4* | *3* | *2* | *1* | *2* |
| | Allongement rupture (%) | 13,9 | 17,4 | 18,0 | 16,9 | 20,6 |
| | *écart type* | *1,4* | *0,4* | *1,4* | *1,7* | *1,1* |

Le tableau 9 montre globalement une amélioration ou au moins un maintien des propriétés mécaniques des compositions I13-I16 de l'invention par rapport à la composition C4 grâce à l'ajout d'un PA10T/X au PA 6.

### Propriétés mécaniques dynamiques des compositions C1-C4 et I1-I16

Les tableaux 10-13 ci-après détaillent chacun les propriétés dynamiques obtenues pour des éprouvettes rectangulaires de 34,81 mm de longueur L, 4 mm de largeur I et 2 mm d'épaisseur e, les performances d'amortissement des compositions C1-C4 et I1-I16 ayant été mesurées comme suit.

On a mesuré les valeurs de tan delta sur l'appareil « DMA Q800 » au moyen du montage à encastrement trois points (voir figure 1) selon la norme ISO 6721-5, en réalisant des balayages en fréquences allant de 0,1 à 20 Hz à différentes températures (de -60° C à +60° C par paliers de 5° C par rapport à la température de transition vitreuse Tg de chaque composition C1-C4, I1-I16), et en appliquant aux éprouvettes un déplacement de 2,5 µm (amplitude de déformation imposée).
On a utilisé ensuite le principe d'équivalence temps-température « TTS », pour construire des courbes maîtresses de tan delta couvrant une large plage de fréquences incluant la plage de fréquences d'intérêt de 1 à 3000 Hz aux températures voulues, ces courbes maîtresses pouvant être « translatées » le long de l'axe horizontal des fréquences en utilisant la relation empirique de Williams-Landel-Ferry (loi de translation « WLF », voir figures 2 à 4) pour représenter l'amortissement ainsi obtenu pour chaque composition C1-C4, I1-I16 à la température voulue. Le principe « TTS » permet d'analyser les valeurs de tan delta des compositions à différentes températures, la plage préférentielle pour laquelle ces compositions ont été développées s'étendant de 60 à 90° C, et la gamme de fréquence de 1 à 3000 Hz.

La figure 2 montre l'amortissement comparé en fonction de la fréquence des compositions C1 et I1-I4 à 80° C après ledit conditionnement en humidité RH50, en relation avec les valeurs de tan delta recensées au tableau 10 aux quatre températures de 60° C, 70° C, 80° C et 90° C.

**[Tableau 10]**

| **Température (° C)** | **Compositions** | **tan delta (%)** | | | | |
|---|---|---|---|---|---|---|
| | | **1 Hz** | **100 Hz** | **500 Hz** | **1000 Hz** | **3000 Hz** |
| 60 | C1 | 3,71 | 3,81 | 3,83 | 3,83 | 3,82 |
| | I1 | 4,50 | 4,43 | 4,36 | 4,30 | 4,22 |
| | I2 | 5,47 | 4,17 | 3,68 | 3,41 | 3,16 |
| | I3 | 4,82 | 4,63 | 4,52 | 4,45 | 4,37 |
| | I4 | 6,53 | 4,91 | 4,40 | 4,15 | 3,79 |
| 70 | C1 | 3,61 | 3,73 | 3,76 | 3,79 | 3,80 |
| | I1 | 4,41 | 4,51 | 4,49 | 4,45 | 4,44 |
| | I2 | 6,08 | 5,28 | 4,80 | 4,65 | 4,28 |
| | I3 | 4,77 | 4,80 | 4,74 | 4,69 | 4,64 |
| | I4 | 7,70 | 6,07 | 5,54 | 5,30 | 4,91 |
| 80 | C1 | 3,42 | 3,64 | 3,68 | 3,70 | 3,72 |
| | I1 | 4,23 | 4,45 | 4,50 | 4,50 | 4,51 |
| | I2 | 6,38 | 5,90 | 5,60 | 5,47 | 5,23 |
| | I3 | 4,55 | 4,82 | 4,83 | 4,82 | 4,79 |
| | I4 | 8,31 | 7,13 | 6,53 | 6,32 | 5,93 |
| 90 | C1 | 3,13 | 3,51 | 3,59 | 3,61 | 3,65 |
| | I1 | 3,93 | 4,33 | 4,40 | 4,43 | 4,45 |
| | I2 | 6,67 | 6,21 | 6,03 | 5,96 | 5,77 |
| | I3 | 4,21 | 4,68 | 4,78 | 4,80 | 4,83 |
| | I4 | 8,27 | 7,96 | 7,44 | 7,19 | 6,82 |

Le tableau 10, illustré par la figure 2, montre que les compositions I1-I4 présentaient un amortissement nettement supérieur à celui de la composition C1 dans les plages précitées de températures et de fréquences d'intérêt. On notera que cet amortissement était encore plus nettement amélioré pour les compositions I3 et I4 comprenant un PA 10T/X avec un ratio molaire des blocs PA 10T : X de 60 :40 (± 5 %) et une Mn comprise entre 10000 et 12000 g/mol.

Ce tableau 10 montre également que l'amortissement augmente avec la quantité de PA 10T/X présente dans la composition, comme le montrent les valeurs de tan delta pour les compositions I2 et I4 (avec 20 % en masse de PA 10T/X) en comparaison de I1 et I3 (avec 10 % en masse de PA 10T/X). On notera que la composition I4 représente ainsi un exemple particulièrement avantageux de réalisation de l'invention au vu de ses valeurs très élevées de tan delta :
- à 60° C, en particulier supérieures à 6,50 % à 1 Hz, à 4,90 % à 100 Hz et de 4,40 % à 500 Hz,
- à 70° C, en particulier supérieures à 7,50 % à 1 Hz, à 6,00 % à 100 Hz et à 5,50 % à 500 Hz,
- à 80° C, en particulier supérieures à 8,30 % à 1 Hz, à 7,10 % à 100 Hz et à 6,50 % à 500 Hz, et
- à 90° C, en particulier supérieures à 8,20 % à 1 Hz, à 7,90 % à 100 Hz, à 7,40 % à 500 Hz et de manière surprenante supérieures à 7,10 % à 1000 Hz et à 6,80 % à 3000 Hz (valeurs souvent plus que doublées en comparaison de celles de la composition C1).

La figure 2 montre en outre un décalage du maximum de tan delta vers les faibles fréquences (inférieures ou égales à 1 Hz, par exemple comprises entre 10⁻² Hz et 1 Hz) avec une augmentation de la quantité de PA 10T/X présente dans la composition, comme le montrent les pics de tan delta pour les compositions I2, I4.

La figure 3 compare les propriétés amortissantes à 80° C après ledit conditionnement RH50 des deux PPA respectifs des compositions 11-12 et I3-I4 à celles du PA66 non fibré « Akulon S223D » également utilisé. On voit à la Figure 3 que l'amortissement maximum (pic de tan delta), s'il est plus élevé pour chacun de ces deux PPA que pour ce PA 66, se situe à des fréquences très faibles (de l'ordre de 10⁻¹⁰ Hz pour le PPA des compositions I1-I2, et de 10⁻⁹ Hz pour le PPA des compositions I3-I4). II en résulte qu'une fraction massique dans la composition de PPA égale ou supérieure à celle du PA 66 serait susceptible d'entraîner:
- un décalage indésirable du pic de tan delta des compositions vers de trop faibles fréquences, et diminuerait donc l'amortissement des compositions dans la gamme de fréquence d'intérêt de 1 à 3000 Hz visée dans l'invention, et
- un changement significatif des paramètres de mise en œuvre des compositions, alors qu'un but de l'invention est qu'elles soient aptes à être mises en œuvre de la façon la plus proche possible de la composition C1 « PA66 GF50 ».

Par conséquent, l'utilisation dans les compositions de l'invention d'un ratio massique PA 66 sur PPA supérieur à 1 permet de remédier à ces inconvénients.

Le tableau 11 ci-après montre l'amortissement comparé en fonction de la fréquence des compositions C1-C2 et I5-I8 aux quatre températures précitées de 60° C, 70° C, 80° C et 90° C, après ledit conditionnement en humidité RH50 tel que défini ci-dessus.

**[Tableau 11]**

| **Température (° C)** | **Compositions** | **tan delta (%)** | | | | |
|---|---|---|---|---|---|---|
| | | **1 Hz** | **100 Hz** | **500 Hz** | **1000 Hz** | **3000 Hz** |
| **60** | C1 | 3,71 | 3,81 | 3,83 | 3,83 | 3,82 |
| | C2 | 4,37 | 4,19 | 4,10 | 4,04 | 3,96 |
| | I5 | 5,17 | 4,46 | 4,19 | 4,06 | 3,82 |
| | I6 | 5,37 | 4,77 | 4,41 | 4,26 | 3,95 |
| | I7 | 5,00 | 4,19 | 3,90 | 3,74 | 3,53 |
| | I8 | 5,10 | 4,11 | 3,74 | 3,55 | 3,32 |
| **70** | C1 | 3,61 | 3,73 | 3,76 | 3,79 | 3,80 |
| | C2 | 4,42 | 4,36 | 4,31 | 4,28 | 4,23 |
| | I5 | 5,67 | 5,00 | 4,76 | 4,65 | 4,49 |
| | I6 | 5,49 | 5,34 | 5,18 | 5,08 | 4,90 |
| | I7 | 5,46 | 4,92 | 4,69 | 4,54 | 4,34 |
| | I8 | 5,63 | 5,00 | 4,71 | 4,54 | 4,27 |
| **80** | C1 | 3,42 | 3,64 | 3,68 | 3,70 | 3,72 |
| | C2 | 4,38 | 4,41 | 4,40 | 4,38 | 4,36 |
| | I5 | 5,89 | 5,49 | 5,25 | 5,14 | 4,97 |
| | I6 | 5,39 | 5,49 | 5,45 | 5,42 | 5,35 |
| | I7 | 5,65 | 5,39 | 5,22 | 5,11 | 4,97 |
| | I8 | 5,88 | 5,54 | 5,34 | 5,22 | 5,05 |
| **90** | C1 | 3,13 | 3,51 | 3,59 | 3,61 | 3,65 |
| | C2 | 4,20 | 4,41 | 4,42 | 4,42 | 4,41 |
| | I5 | 5,82 | 5,79 | 5,63 | 5,55 | 5,38 |
| | I6 | 5,11 | 5,45 | 5,48 | 5,49 | 5,48 |
| | I7 | 5,72 | 5,60 | 5,51 | 5,46 | 5,36 |
| | I8 | 5,97 | 5,81 | 5,69 | 5,63 | 5,52 |

Le tableau 11 combiné à la figure 4, qui l'illustre à la température de 80° C, montre que les compositions I5-I8 présentaient un amortissement nettement supérieur à celui des compositions C1-C2 dans les gammes de températures et de fréquences d'intérêt, i.e. entre 1 et 3000 Hz, même si cet amortissement était parfois moindre que celui mesuré pour les compositions I1-I4 comprenant un PA 10T/X à titre de PPA. On peut noter que la présence dans la composition C2 d'un PA 4T à titre de PPA mélangé au PA 66 ne permet pas d'obtenir un amortissement suffisant à 60-90° C aux fréquences d'intérêt de 1-3000 Hz, comme le montrent les valeurs de tan delta de la composition C2 souvent inférieures à celles obtenues pour les compositions I1-I4 (en dépit d'une fraction massique de PA 4T dans la composition C2 de 20 %).

En particulier, la composition I7 qui comprend, à titre de PPA, 10 % en masse d'un PA 10T/X autre que ceux des compositions I1-I4 (i.e. un PA 10T/PA 6T caractérisé par un ratio molaire PA 10T : PA 6T entre 8 et 10), présente un amortissement amélioré par rapport à celui obtenu pour les compositions I1 et I3 (comprenant également 10 % en masse d'un PA 10T/X de type PA 10T/6-3-T).

De plus, les compositions I5, I6 et I8 selon l'invention, comprenant 20 % en masse d'un PA 6T/X, d'un PA 9T et d'un PA 10T, respectivement, présentent chacune un amortissement sensiblement égal ou supérieur à ceux obtenus pour les compositions I1 et I3 comprenant toutes deux 10 % en masse de PA 10T/X.

Le tableau 12 ci-après montre l'amortissement comparé en fonction de la fréquence des compositions C3 et I9-I12 aux quatre températures précitées de 60° C, 70° C, 80° C et 90° C, après ledit conditionnement en humidité RH50 tel que défini ci-dessus.

**[Tableau 12]**

| **Température (° C)** | **Compositions** | **tan delta (%)** | | | | |
|---|---|---|---|---|---|---|
| | | **1 Hz** | **100 Hz** | **500 Hz** | **1000 Hz** | **3000 Hz** |
| **60** | C3 | 4,15 | 4,49 | 4,64 | 4,69 | 4,81 |
| | I9 | 7,23 | 7,34 | 7,15 | 7,00 | 6,80 |
| | I10 | 10,49 | 8,81 | 7,19 | 6,31 | 5,25 |
| | I11 | 4,97 | 4,87 | 4,83 | 4,81 | 4,75 |
| | I12 | 6,10 | 5,59 | 5,31 | 5,17 | 4,91 |
| **70** | C3 | 3,96 | 4,24 | 4,35 | 4,41 | 4,49 |
| | I9 | 6,79 | 7,36 | 7,41 | 7,39 | 7,32 |
| | I10 | 10,27 | 10,27 | 9,53 | 9,12 | 8,01 |
| | I11 | 5,02 | 4,95 | 4,91 | 4,90 | 4,88 |
| | I12 | 6,32 | 6,04 | 5,89 | 5,80 | 5,68 |
| **80** | C3 | 3,67 | 4,06 | 4,15 | 4,19 | 4,27 |
| | I9 | 6,38 | 7,06 | 7,26 | 7,33 | 7,39 |
| | I10 | 9,91 | 10,51 | 10,42 | 10,27 | 9,81 |
| | I11 | 4,95 | 5,00 | 4,98 | 4,96 | 4,94 |
| | I12 | 6,42 | 6,26 | 6,17 | 6,13 | 6,04 |
| **90** | C3 | 3,56 | 3,85 | 3,98 | 4,04 | 4,11 |
| | I9 | 5,92 | 6,71 | 6,96 | 7,06 | 7,21 |
| | I10 | 9,64 | 10,27 | 10,47 | 10,50 | 10,44 |
| | I11 | 4,74 | 5,00 | 5,02 | 5,01 | 5,00 |
| | I12 | 6,29 | 6,39 | 6,33 | 6,30 | 6,24 |

Le tableau 12 montre que les compositions I9-I12 présentaient un amortissement nettement supérieur à celui de la composition C3 dans les gammes de températures et de fréquences d'intérêt, i.e. entre 60 et 90° C et entre 1 et 3000 Hz, en particulier pour les compositions I9, I10 et I12.

Comme illustré à la figure 5, on notera que la composition I9 représente un mode préférentiel de l'invention pour l'utilisation dans un véhicule automobile électrique, en raison de sa température à laquelle tan delta est maximale qui est d'environ 60° C tout en présentant à cette température une valeur moyenne élevée de tan delta entre 1 et 3000 Hz. A titre de comparaison, la composition I10, bien que présentant des valeurs encore plus élevées de tan delta, présentait une température à laquelle tan delta est maximale d'environ 90° C, température excédant la limite usuelle de 85° C pour des véhicules électriques.

Le tableau 13 ci-après montre l'amortissement comparé en fonction de la fréquence des compositions C4 et I13-I16 aux quatre températures précitées de 60° C, 70° C, 80° C et 90° C, après ledit conditionnement en humidité RH50 tel que défini ci-dessus.

**[Tableau 13]**

| **Température (° C)** | **Compositions** | **tan delta (%)** | | | | |
|---|---|---|---|---|---|---|
| | | **1 Hz** | **100 Hz** | **500 Hz** | **1000 Hz** | **3000 Hz** |
| **60** | C4 | 4,75 | 5,06 | 5,22 | 5,31 | 5,43 |
| | I13 | 6,71 | 7,27 | 7,31 | 7,28 | 7,22 |
| | I14 | 7,20 | 8,20 | 8,30 | 8,30 | 8,20 |
| | I15 | 8,21 | 8,13 | 7,86 | 7,62 | 7,35 |
| | I16 | 10,24 | 7,26 | 6,31 | 5,94 | 5,51 |
| **70** | C4 | 4,44 | 4,85 | 4,95 | 4,99 | 5,08 |
| | I13 | 6,23 | 6,96 | 7,15 | 7,22 | 7,28 |
| | I14 | 6,54 | 7,70 | 8,03 | 8,14 | 8,28 |
| | I15 | 7,93 | 8,31 | 8,29 | 8,24 | 8,10 |
| | I16 | 11,32 | 9,12 | 8,04 | 7,65 | 6,92 |
| **80** | C4 | 4,07 | 4,62 | 4,76 | 4,81 | 4,88 |
| | I13 | 5,71 | 6,51 | 6,77 | 6,87 | 7,03 |
| | I14 | 5,92 | 7,09 | 7,21 | 7,70 | 7,91 |
| | I15 | 7,65 | 8,13 | 8,26 | 8,30 | 8,32 |
| | I16 | 11,25 | 10,56 | 9,60 | 9,12 | 8,42 |
| **90** | C4 | 3,79 | 4,34 | 4,51 | 4,59 | 4,69 |
| | I13 | 5,07 | 6,17 | 6,41 | 6,51 | 6,68 |
| | I14 | 5,26 | 6,60 | 7,00 | 7,18 | 7,44 |
| | I15 | 7,19 | 7,91 | 8,07 | 8,13 | 8,23 |
| | I16 | 10,78 | 11,28 | 10,76 | 10,37 | 9,77 |

Le tableau 13 montre que les compositions I13-I16 présentaient un amortissement nettement supérieur à celui de la composition C4 dans les gammes de températures et de fréquences d'intérêt, i.e. entre 60 et 90° C et entre 1 et 3000 Hz, ces compositions 113-116 apparaissant avantageuses notamment pour leur utilisation dans le support de liaison précité dans un véhicule automobile électrique.

## Revendications

1. Composition polymérique thermoplastique (I1, I2, I3, I4, I5, I6, I7, I8, I9, I10) présentant des propriétés d'amortissement de vibrations dans une plage de fréquences allant de 1 Hz à 3000 Hz et à une température de 60° C à 90° C, la composition comprenant :
- au moins un polyamide aliphatique,
- au moins un polyphtalamide issu au moins en partie d'une diamine aliphatique ayant de 6 à 12 atomes de carbone et d'un acide dicarboxylique aromatique comprenant de l'acide téréphtalique, le ratio massique dudit au moins un polyamide aliphatique sur ledit au moins un polyphtalamide étant supérieur à 1, et
- une charge renforçante comprenant des fibres de verre,
dans laquelle la composition présente, après un conditionnement dans de l'air à 50 % d'humidité relative, des valeurs de tan delta mesurées par analyse mécanique dynamique selon la norme ISO 6721-5 sur des éprouvettes rectangulaires de 34,81 mm de longueur, 4 mm de largeur et 2 mm d'épaisseur, par des balayages en fréquences allant de 0,1 Hz à 20 Hz et avec une amplitude de déformation de 2,5 µm,
lesdites valeurs de tan delta, obtenues par le principe de superposition temps-température, étant maximales à une température comprise entre 60° C et 90° C dans ladite plage de fréquences, et satisfaisant à l'une au moins des conditions (i), (ii), (iii) suivantes, pour au moins une fréquence de ladite plage de fréquences :
(i) tan delta > 4,20 % à 60° C,
(ii) tan delta > 4,00 % à 80° C,
(iii) tan delta > 3,80 % à 90° C.

2. Composition (I1, I2, I3, I4, I5, I6, I7, I8, I9, I10) selon la revendication 1, dans laquelle lesdites valeurs de tan delta satisfont en outre à l'une au moins des conditions (ia), (iia), (iiia) suivantes, à la fois pour des fréquences de 1 Hz et de 3000 Hz:
(ia) tan delta > 4,30 % à 60° C, de préférence > 4,40 % à 60° C
(iia) tan delta > 4,20 % à 80° C, de préférence > 4,30 % à 80° C,
(iiia) tan delta > 3,90 % à 90° C, de préférence > 4,20 % à 90° C,
et de préférence dans laquelle lesdites valeurs de tan delta satisfont en outre à l'une au moins des conditions (ib), (iib), (iiib) suivantes, à la fois pour des fréquences de 1 Hz et 100 Hz:
(ib) tan delta > 4,80 % à 60° C, de préférence > 5,20 % à 60° C et par exemple > 6,00 à 60° C
(iib) tan delta > 5,00 % à 80° C, de préférence > 5,50 % à 80° C et par exemple > 7,00 à 80° C,
(iiib) tan delta > 5,50 % à 90° C, de préférence > 6,00 % à 90° C et par exemple > 7,50 à 90° C.

3. Composition (I1, I2, I3, I4, I5, I6, I7, I8, I9, I10) selon une des revendications précédentes, dans laquelle la composition présente :
- à 23° C après un conditionnement sec comme à l'état moulé (DAM), l'une au moins des propriétés suivantes mesurées selon la norme ISO 527:
un module d'Young > 14,7 GPa et de préférence > 16,0 GPa,
une contrainte à la rupture > 200 MPa et de préférence > 220 MPa,
un allongement à la rupture > 2,1 % et de préférence > 2,6 % ; et/ou
- à 120° C après ledit conditionnement sec comme à l'état moulé (DAM), l'une au moins des propriétés suivantes mesurées selon la norme ISO 527:
un module d'Young > 4,6 GPa et de préférence > 5,2 GPa,
une contrainte à la rupture > 80 MPa et de préférence > 90 MPa,
un allongement à la rupture ≥ 2,0 % et de préférence > 4,0 %.

4. Composition (I1, I2, I3, I4, I5, I6, I7, I8, I9, I10) selon une des revendications précédentes, dans laquelle la composition présente :
- à 23° C après ledit conditionnement humide dans de l'air à 50 % d'humidité relative (RH50), l'une au moins des propriétés suivantes mesurées selon la norme ISO 527:
un module d'Young ≥ 12,0 GPa et de préférence > 13,5 GPa,
une contrainte à la rupture > 165 MPa et de préférence > 180 MPa,
un allongement à la rupture > 3,0 % et de préférence > 3,3 % ; et/ou
- à 120° C après ledit conditionnement humide dans de l'air à 50 % d'humidité relative (RH50), l'une au moins des propriétés suivantes mesurées selon la norme ISO 527:
un module d'Young ≥ 4,8 GPa et de préférence > 6,0 GPa,
une contrainte à la rupture ≥ 73 MPa et de préférence ≥ 81 MPa,
un allongement à la rupture > 3,5 % et de préférence > 6,0 %.

5. Composition (I1, I2, I3, I4, I5, I6, I7, I8, I9, I10) selon une des revendications précédentes, dans laquelle le ratio massique dudit au moins un polyamide aliphatique sur ledit au moins un polyphtalamide est inclusivement compris entre 1,1 et 5,0, de préférence entre 1,5 et 4,5.

6. Composition (I1, I2, I3, I4, I5, I6, I7, I8, I9, I10) selon une des revendications précédentes, dans laquelle la composition comprend selon les fractions massiques suivantes :
- ledit au moins un polyamide aliphatique selon 20 % à 55 %, de préférence 25 % à 50 %,
- ledit au moins un polyphtalamide selon 5 % à 30 %, de préférence 10 % à 27 %,
- lesdites fibres de verre selon 20 % à 55 %, de préférence 25 % à 50 %,
et de préférence dans laquelle ladite charge renforçante est constituée desdites fibres de verre.

7. Composition (I1, I2, I3, I4, I5, I6, I7, I8, I9, I10) selon une des revendications précédentes, dans laquelle la composition est dépourvue de tout agent compatibilisant ou de mise en œuvre, étant par exemple dépourvue de toute polyoléfine et de tout polyéther, la composition étant de préférence constituée dudit au moins un polyamide aliphatique, dudit au moins un polyphtalamide et de ladite charge renforçante.

8. Composition (I1, I2, I3, I4, I5, I6, I7, I8, I9, I10) selon une des revendications précédentes, dans laquelle ledit au moins un polyamide aliphatique est choisi dans le groupe constitué par les PA 66, PA 6, PA 11, PA 12, PA 6/66, PA 4.6, PA 5.6, PA 6.9, PA 6.10, PA 6.12, PA 10.10, PA 10.12 et les mélanges d'au moins deux de ces PA,
et de préférence dans laquelle ledit au moins un polyamide aliphatique est un PA 66 et/ou un PA 6.

9. Composition (I1, I2, I3, I4, I5, I6, I7, I8, I9, I10) selon une des revendications précédentes, dans laquelle ledit au moins un polyphtalamide est choisi dans le groupe constitué par les polyamides PA 6T, les polyamides PA 9T, les polyamides PA 10T, les copolyamides PA 6T/X, les copolyamides PA 10T/X, et les mélanges d'au moins deux de ces polyphtalamides, où X est au moins un autre motif polyamide issu d'une diamine aliphatique ayant de 6 à 12 atomes de carbone et d'un acide dicarboxylique aromatique comprenant de l'acide téréphtalique ou isophtalique, X étant par exemple égal à 66/6I ou à 6I dans PA 6T/X et étant issu d'une diamine aliphatique ayant de 6 à 9 atomes de carbone dans PA 10T/X,
et de préférence dans laquelle ledit au moins un polyphtalamide est choisi parmi les PA 10T/X, étant issu de 1,10-décaméthylène diamine et d'acide téréphtalique et d'un motif X issu d'une diamine aliphatique ayant de 6 à 9 atomes de carbone et d'acide téréphtalique.

10. Composition (I1, I2, I3, I4, I7, I9, I10) selon la revendication 9, dans laquelle ledit au moins un polyphtalamide est constitué d'un PA 10T/X avec X choisi parmi PA 6T et PA 6-3-T, de préférence avec un ratio molaire PA 10T : X supérieur à 1,
et de préférence dans laquelle ledit au moins un polyphtalamide est constitué d'un PA 10T/PA 6-3-T, avec un ratio molaire PA 10T : PA 6-3-T inclusivement compris entre 1,1 et 10.

11. Composition (I3, I4, I9, I10) selon la revendication 10, dans laquelle ledit au moins un polyphtalamide est constitué d'un :
- PA 10T/PA 6-3-T de masse moléculaire moyenne en nombre mesurée par GPC comprise entre 10000 et 12000 g/mol, de préférence entre 10700 et 11700 g/mol, avec ledit ratio molaire PA 10T : PA 6-3-T inclusivement compris entre 1,2 et 2 et de préférence entre 1,3 et 1,7, ou
- d'un PA 10T/PA 6-3-T de masse moléculaire moyenne en nombre mesurée par GPC comprise entre 12000 et 14000 g/mol, de préférence entre 12500 et 13500 g/mol, avec ledit ratio molaire PA 10T : PA 6-3-T inclusivement compris entre 8 et 10 et de préférence entre 8,5 et 9,5.

12. Composition (I7) selon la revendication 10, dans laquelle ledit au moins un polyphtalamide est constitué d'un PA 10T/PA 6T, avec un ratio molaire PA 10T : PA 6T inclusivement compris entre 8 et 10 et de préférence entre 8,5 et 9,5.

13. Composition (I1, I2, I3, I4, I5, I6, I7, I8, I9, I10) selon une des revendications précédentes, comprenant le produit d'un mélangeage par voie fondue dudit au moins un polyamide aliphatique, dudit au moins un polyphtalamide et de ladite charge renforçante, de préférence par extrusion.

14. Procédé de préparation d'une composition (I1, I2, I3, I4, I5, I6, I7, I8, I9, I10) selon une des revendications précédentes, dans lequel on met en œuvre un mélangeage par voie fondue, dans une extrudeuse par exemple bi-vis, dudit au moins un polyamide aliphatique, dudit au moins un polyphtalamide et de ladite charge renforçante, de préférence sans utiliser d'agent compatibilisant ou de mise en œuvre tel qu'une polyoléfine ou un polyéther,
et de préférence dans lequel on met en œuvre une étape de pré-mélangeage dudit au moins un polyamide aliphatique et dudit au moins un polyphtalamide, avant d'introduire dans l'extrudeuse ladite charge renforçante de préférence constituée desdites fibres de verre.

15. Dispositif à fonction dynamique pour véhicule à moteur, le dispositif étant apte à amortir des vibrations en particulier dans une plage de fréquences allant de 1 Hz à 3000 Hz et à une température de 60° C à 90° C, dans laquelle le dispositif comprend une composition (I1, I2, I3, I4, I5, I6, I7, I8, I9, I10) selon une des revendications 1 à 13, le dispositif pouvant être dépourvu de toute partie métallique et étant de préférence constitué de ladite composition moulée par injection ou bien de ladite composition moulée par injection qui est solidaire d'un insert métallique par exemple fileté,
et de de préférence dans lequel le dispositif est pour un véhicule automobile à moteur thermique, hybride ou électrique, le dispositif étant choisi parmi les pièces structurelles transmettant des vibrations par exemple des roues du véhicule, et les supports antivibratoires réunissant des premier et deuxième éléments rigides en amortissant des vibrations entre eux et en supportant une charge, ledit support antivibratoire étant de préférence un support de liaison reliant le moteur à un élément de la structure du véhicule, tel que la caisse du véhicule.
